# EUROPÄISCHE PATENTANMELDUNG

(11) **EP 2 075 616 A1**
(43) Veröffentlichungstag der Anmeldung: **01.07.2009**
(21) Anmeldenummer: 07025208.5
(22) Anmeldetag: 28.12.2007
(51) Int. Cl.: G02B 21/18, G02B 21/36

(54) **Vorrichtung mit einer Kamera und einer Einrichtung zum Abbilden und Projizieren des aufgenommen Bildes**

(71) Anmelder: Möller-Wedel GmbH, 22880 Wedel (DE)
(72) Erfinder: Die Erfindernennung liegt noch nicht vor
(74) Vertreter: Glawe, Delfs, Moll

(57) **Zusammenfassung**

Die Vorrichtung mit einer elektronischen Kamera (21) zum Aufnehmen eines Objekts (41) oder eines Teils (42) eines Objekts während der Bearbeitung desselben, insbesondere während einer chirurgischen Operation, und mit einer Einrichtung (11, 12) zum Abbilden und Projizieren des aufgenommenen Bildes, zeichnet sich dadurch aus, dass sie optische Elemente (31, 32, 33, 34) zum deckungsgleichen Abbilden des aufgenommenen Bildes auf das Objekt (41) mit einem Strahlengang, der im wesentlichen mit dem Aufnahmestrahlengang zusammenfällt, und im Aufnahmestrahlengang wenigstens einen wellenlängenselektiven Filter (23, 31) aufweist.

## Beschreibung

Die Erfindung betrifft eine Vorrichtung mit einer elektronischen Kamera zum Aufnehmen eines Objekts oder eines Teils eines Objekts während der Bearbeitung desselben, insbesondere während einer chirurgischen Operation, und mit einer Einrichtung zum Abbilden und Projizieren des aufgenommenen Bildes.

Solche Vorrichtungen sind zum Beobachten der Bearbeitungsvorgänge, auch von Operationen weit verbreitet, um die Vorgänge zu dokumentieren und um sie einem möglicherweise größeren Kreis von Zuschauern sichtbar zu machen.

In der Chirurgie tritt häufig das Problem auf, dass die Resektion von krankem Gewebe dadurch erschwert wird, dass dieses Gewebe sich von dem umgebenden gesunden Gewebe weder optisch noch taktil eindeutig unterscheiden lässt. Wenn möglich, wird das kranke Gewebe weiträumig ausgeschnitten, um alle befallenen Zellen zu entfernen. Diese Vorgehensweise ist jedoch nicht immer möglich, da sonst evtl. die Funktion der befallenen Organe gestört wird. In diesen Fällen wird das Gewebe mit Farbstoffen markiert, die möglichst selektiv das kranke Gewebe vom gesunden unterscheiden lassen.

Vorzugsweise werden dabei Fluoreszenzfarbstoffe verwendet, da bei diesen durch spektrale Trennung des Anregungslichts vom Beobachtungslicht die Gewebeabgrenzung leichter erkennbar wird.

Ein bekanntes Beispiel für diese Vorgehensweise ist die Resektion von Glioplastom-Tumoren in der Gehirnchirurgie. Dem Patienten wird präoperativ Aminolävulinsäure verabreicht, die sich selektiv in den Tumorzellen zu Protoporphyrin IX umwandelt. Während der Operation können unter Blaulicht die Tumorzellen durch die rote Fluoreszenz des Protoporphyrin IX von den umgebenden, nicht fluoreszierenden gesunden Zellen gut unterschieden werden. Dadurch ist eine schonende Resektion dieses Tumors zum Vorteil des Patienten möglich. Nachteilig ist aber, dass die Operation nur unter gefiltertem Licht durchgeführt werden kann und der Chirurg nicht die volle optische Information erhält wie bei einer Operation unter weißem Licht.

In zahlreichen Forschungsinstituten wird an der molekularen Bildgebung gearbeitet, bei der unterschiedliche Fluoreszenzfarbstoffe an biochemische Wirkstoffe angebracht werden, die sich in bestimmten Strukturen sammeln und diese dadurch im Anregungslicht durch Fluoreszenz sichtbar machen. Verwendet werden dabei oft Farbstoffe mit Fluoreszenz im Infrarotbereich, da das Gewebe einerseits optimal unter Weißlicht untersucht und behandelt werden und andererseits die Fluoreszenz durch Filter vom Weißlicht abgetrennt und von einer Kamera aufgezeichnet werden kann. Das von der Kamera aufgezeichnete Bild des fluoreszierenden Gewebes wird dann auf einen Bildschirm geleitet und kann dort beobachtet werden.

Während einer Operation ist aber nachteilig, wenn der Chirurg im Weißlicht bei direkter Sicht operieren muss und das markierte Gewebe aber nur auf einem Bildschirm sichtbar ist. Dann ist es schwierig, genau die Grenzen des markierten Gewebes zu erkennen und dieses präzise zu resizieren. Auch bei Farbstoffen, deren Fluoreszenz im sichtbaren Bereich des Spektrums liegt, ist die genaue Erkennung der Grenzen des markierten Gewebes schwierig, da die Fluoreszenz in dem weißen umgebungslicht meist zu schwach und daher nur unpräzise zu erkennen ist.

Ähnliche Probleme können in anderen technischen Gebieten auftreten, wo Materialien bearbeitet werden.

Die Aufgabe der Erfindung besteht daher darin, die Fluoreszenz auch bei der Beobachtung des Objekts, insbesondere des Gewebes durch den Chirurgen, im weißen Licht besser sichtbar zu machen.

Diese Aufgabe wird erfindungsgemäß dadurch gelöst, dass die Vorrichtung optische Elemente zum deckungsgleichen Abbilden des aufgenommenen Bildes auf das Objekt mit einem Strahlengang, der im wesentlichen mit dem Aufnahmestrahlengang zusammenfällt, und im Aufnahmestrahlengang wenigstens einen wellenlängenselektiven Filter aufweist.

Das Objekt wird also durch die Kamera nicht mit Licht des ganzen natürlichen Spektrums aufgenommen, sondern nur mit Licht eines besonderen Bereichs des Spektrums. Dadurch besteht die Möglichkeit, im Wesentlichen nur das Fluoreszenzlicht abzubilden. Das Signal der Kamera wird über eine Bildverarbeitung an einen Projektor für Videobilder weiterleitet, der das aufgenommene Fluoreszenzbild über einen Strahlenteiler durch eine geeignete Optik passgenau auf das Objekt zurückprojiziert. Dabei ist es wesentlich, dass die Projektion exakt in der entgegengesetzten Richtung erfolgt wie die Aufnahme des Fluoreszenzbildes. Kamera und Projektor sowie die zugehörige Optik sollen daher in der erfindungsgemäßen Vorrichtung integriert sein, damit diese steril im Operationsfeld positioniert werden kann. Alternativ kann aber das Bild über ein sterilisierbares Bildumlenkelement im Bereich des Objektfeldes auf das fluoreszierende Gewebe projiziert werden.

Die Erfindung wird im Folgenden anhand von vorteilhaften Ausführungsformen unter Bezugnahme auf die beigefügten Zeichnungen beschrieben. Es zeigen:
- Fig. 1: in schematischer Darstellung den Strahlengang einer ersten Ausführungsform; und
- Fig. 2: in schematischer Darstellung den Strahlengang einer zweiten Ausführungsform.

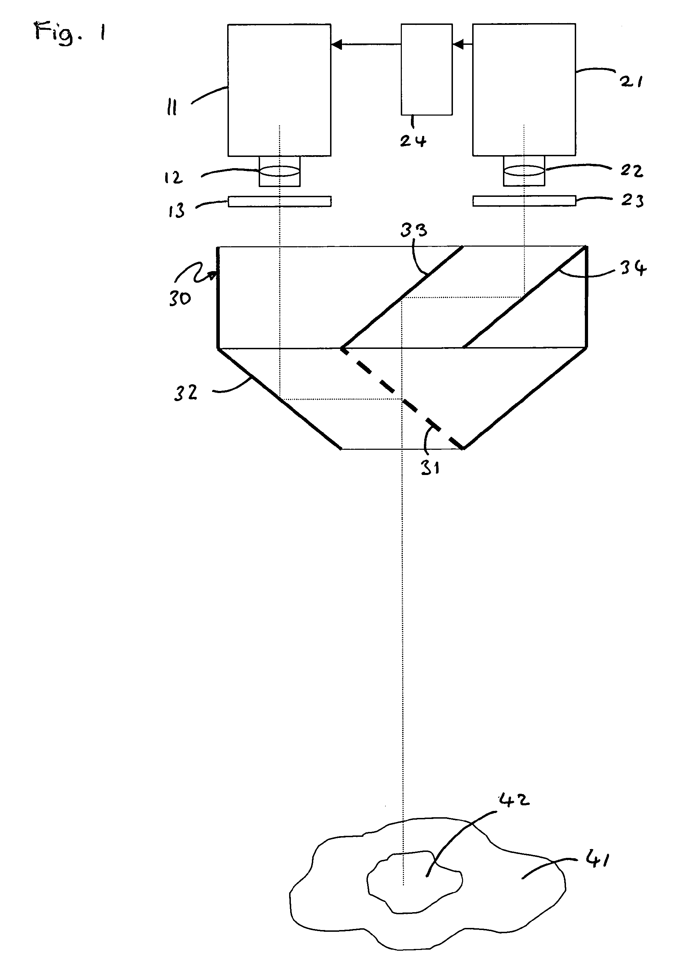

In Fig. 1 ist das Strahlengang einer ersten Ausführungsform schematisch dargestellt, bei der ich Kamera 21 und die Abbildungseinrichtung 11 auf das Objekt 41, 42 gerichtet sind. Die Kamera 21 mit einem Objektiv 22 und einem vorgeschalteten Filter 23, das das sichtbare Licht zumindest stark abgeschwächt, das Infrarotlicht der Fluoreszenz aber durchlässt, ist über einer Anordnung von Spiegeln oder Prismen 30 angebracht. Neben der Kamera 21 befindet sich ein miniaturisierter Videoprojektor 11, der ebenfalls ein Objektiv 12 und einen Farbfilter 13 hat, der die Farbe des projizierten Bildes beeinflusst. Das Signal der Kamera wird über eine elektronische Einheit 24 aufbereitet, je nach Bedarf analog oder digital verändert und danach an den Videoprojektor 11 geleitet.

Die Anordnung 30 von Spiegeln oder Prismen enthält eine teilverspiegelte Fläche 31, durch die vom Objekt 41 ausgehende Lichtstrahlen über die Spiegel 33 und 34 in die Kamera 21 gelangen. Vom Videoprojektor 11 ausgehende Lichtstrahlen fallen über den Spiegel 32 ebenfalls auf die teilverspiegelte Fläche 31 und gelangen von dort aus in exakt umgekehrter Richtung des Beobachtungsstrahls auf das Objekt 41.

Die teilverspiegelte Fläche 31 kann auch wellenlängenselektiv ausgeführt werden in der Weise, dass das vom Objekt 41 ausgehende Fluoreszenzlicht optimal durch sie hindurchtritt, während das vom Videoprojektor 11 abgestrahlte Licht optimal reflektiert wird. Solche Flächen ergeben sich bei Verwendung dichroitischer Beschichtungen zur Trennung von Farben. Oft eingesetzt werden solche Filter in 3-Chip-Kamerasystemen, bei denen das einfallende Licht in drei Farben aufgeteilt wird, die jeweils von einer getrennten CCD-Schicht erfasst und als elektrisches Signal weitergeleitet werden.

Die Optiken 12 und 22 vor dem Videoprojektor 11 und der Kamera 21 sind so ausgelegt bzw. werden so eingestellt, dass die Fokusebenen des Videoprojektors und der Kamera beide auf dem Objekt 41 liegen. Eine Struktur 42 auf dem Objekt 41, die im Infraroten fluoresziert, wird daher exakt mit dem Licht aus dem Videoprojektor 11 bestrahlt, sodass sie im Licht des Filters 13 erscheint, auch wenn sie im Weißlicht von der Umgebung der Struktur 41 nicht zu unterscheiden ist.

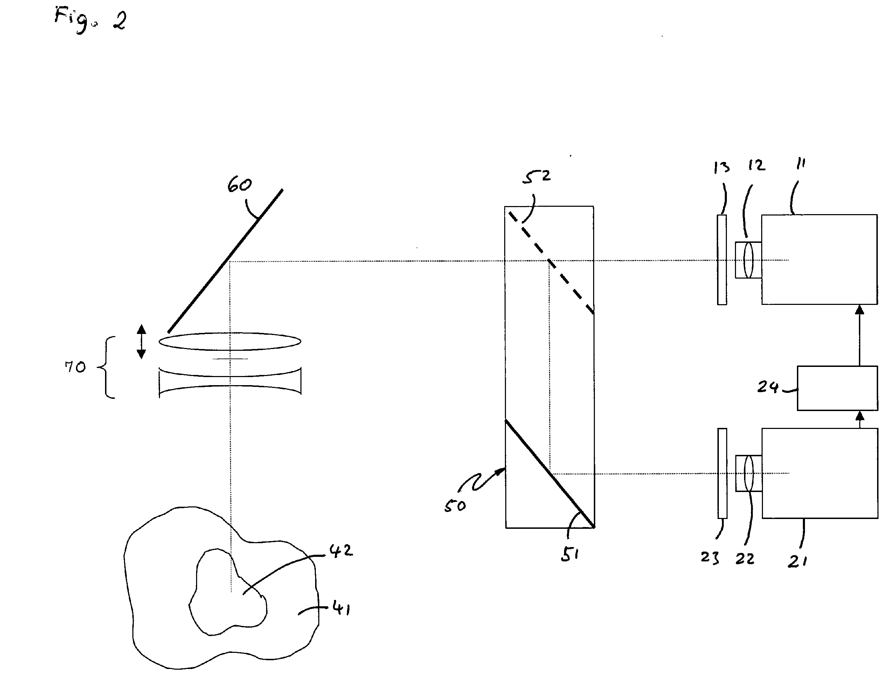

In Fig. 2 ist die Vorrichtung in einer im Wesentlichen horizontalen Anordnung gezeigt, die jenseits des Operationsfeldes und damit entfernt vom Chirurgen angebracht sein kann. In diesem Beispiel ist die Anordnung 50 von Spiegeln oder Prismen anders ausgeführt als in Fig. 1. Durch nur eine teilverspiegelte Fläche 52 und einen Spiegel 51 ist sie wesentlich einfacher und erlaubt trotzdem die exakt entgegengesetzte Ausrichtung von Beobachtungs- und Projektionsstrahlen. Ähnlich wie oben kann die teilverspiegelte Fläche 52 in optimaler Weise wellenlängenselektiv ausgeführt werden, sodass das Fluoreszenzlicht vom Objekt 41 optimal zur Kamera und das vom Projektor ausgehende Licht optimal zum Objekt 41 gelangt.

In Fig. 2 wird der Beobachtungsstrahl über einen Spiegel 60 aus der im Wesentlichen vertikalen Richtung in eine im Wesentlichen horizontale Richtung zur Kamera 21 umgelenkt. Entsprechend gelangt der Projektionsstrahl über den Spiegel 60 aus der im Wesentlichen horizontalen Richtung vom Projektor in die im Wesentlichen vertikale Richtung zum Objekt 41.

Der Spiegel 60 kann auch aus einer teilverspiegelten Fläche bestehen oder aus einer Glasplatte, deren Reflexion hinreichend stark ist. Dann hat diese Anordnung den Vorteil, dass der Chirurg durch den Spiegel 60 hindurch auf das Operationsfeld schauen kann und damit im Wesentlichen kolinear zu dem projizierten Licht auf das Operationsfeld blickt, wodurch er keine Schatten in der projizierten Struktur sieht.

Die Beobachtung könnte dabei auch durch ein Mikroskop erfolgen.

In Fig. 2 ist zusätzlich zu den optischen Elementen 12 und 22 eine Objektivgruppe 70 dargestellt, durch die beide Strahlengänge gleichzeitig verlaufen. Idealerweise verlaufen die Strahlengänge hinter der Objektivgruppe in einem parallelen Strahlengang, der durch die Linsensysteme 12 und 22 auf die jeweiligen Bildelemente in der Kamera und dem Projektor fokussiert wird. Eine solche gemeinsame abbildende Optik ist von großem Vorteil, da bei Änderung des Arbeitsabstands die Fokusebene für beide Strahlengänge erhalten bleibt. Eine solche Änderung des Arbeitsabstands kann durchgeführt werden, indem man entweder die ganze Objektivgruppe 70 verschiebt oder eins der Elemente in dieser Objektivgruppe. In dem gezeigten Beispiel besteht die Objektivgruppe aus einer Sammellinse 71 und einer Zerstreuungslinse 72. Die Brechkraft der Linsen ist so gewählt, dass sie gemeinsam als Objektivgruppe 70 eine abbildende Wirkung haben. Bei einer solchen Kombination genügt aber eine kleine Verschiebung einer der beiden Linsen, um den Abstand zur Fokusebene erheblich zu variieren. Dabei bleibt die Deckungsgleichheit von Objekt und Projektion erhalten. Die Objektivgruppe 70 könnte dabei auch das Objektiv eines Operationsmikroskops bilden.

Bei beiden Ausführungsformen ist eine Vertauschung von Kamera und Projektor möglich, wenn die zugehörigen Optiken, Filter oder wellenlängenselektiven Teilverspiegelungen entsprechend mit verändert werden. Außer den zwei gezeigten Beispielen gibt es noch zahlreiche weitere Möglichkeiten, die Strahlen mit gemeinsamer Fokusebene auf dem Objekt 41 bei gleichen Abmessungen der fluoreszierenden Struktur 42 und deren projiziertes Bild zusammenzuführen.

Bei dem gezeigten Ausführungsformen kann der Filter 13 weggelassen werden, wenn die Projektion ohnehin schon nur in einer Farbe erfolgt. Das kann z.B. durch die Verwendung leuchtstarker Licht emittierender Dioden geschehen. Sind die teilverspiegelten Flächen 31 bzw. 52 hinreichend stark wellenlängenselektiv ausgeführt, ergibt sich ebenfalls die Möglichkeit, einen der Filter 13 oder 23 oder beide Filter wegzulassen.

Weitere Variationsmöglichkeiten für die Ausführung des Fluoreszenzprojektors sind möglich. So können auch Anordnungen gewählt werden, bei denen die Strahlen nicht exakt entgegengesetzt verlaufen, sondern in einem kleinen Winkel zueinander stehen. Die Größe des zulässigen Winkels ergibt sich aus der räumlichen Struktur des Operationsfeldes. Der Winkel kann umso größer werden, je flacher das Operationsfeld ist, da dann keine Abschattungen auftreten. Allerdings birgt dies die Gefahr, dass die Projektion nicht genau auf der fluoreszierenden Struktur liegt, wenn das Objekt 41 außerhalb der Fokusebene des Systems ist. Dann besteht das Risiko, dass zu viel gesundes und zu wenig krankes Gewebe resiziert wird.

Die Struktur 42 des Objekts 41 kann je nach der Wahl des Farbstoffs durch Fluoreszenz im sichtbaren oder im infraroten Spektralbereich erkennbar sein. Während im Infraroten die Aufnahme über eine Kamera unerlässlich ist, kann es auch bei sichtbarer Fluoreszenz hilfreich sein, durch schmalbandige Filter das üblicherweise verwendete weiße Licht zu unterdrücken. Auf jeden Fall ist es aber zweckmäßig, das Anregungslicht für die Fluoreszenz nicht mit abzubilden, was durch entsprechende wellenlängenselektive Filter erreicht werden kann. Bei sichtbarer Fluoreszenz kann das Abbildungssignal entweder in der gleichen Fluoreszenzfarbe oder in einer für das Auge besser erkennbaren Farbe auf das Objekt projiziert werden. In vielen Fällen gibt die Stärke der Fluoreszenz eine Aussage über die Konzentration des Farbstoffs und damit über die biologischen Eigenschaften des Objekts. In diesen Fällen ist es von Vorteil, wenn das Signal der Kamera in der elektronischen Einheit 24 so gewandelt wird, dass unterschiedliche Helligkeiten in unterschiedlichen Farben übertragen und in dieser Weise auf das Objekt zurück projiziert werden. So können beispielsweise bei streuenden Tumoren der nekrotische Kern, der aktive Kern mit lOO-prozentiger Tumorzellenkonzentration und Randgebiete mit geringerer Tumorzellenkonzentration durch Farbunterschiede auseinandergehalten werden.

Hinsichtlich der Anbringung der erfindungsgemäßen Vorrichtung ist es vorteilhaft, diese, sofern sie hinreichend klein und leicht ist, an den Montageschienen, die üblicherweise seitlich am Operationstisch angebracht sind, zu montieren. Da sich die Vorrichtung dann im Bereich des Operationsfeldes befindet, muss sie entweder desinfizierbar oder sterilisierbar sein. Die Sterilität kann aber auch mit heute schon gebräuchlichen sterilen Hüllen erreicht werden, die - ähnlich wie beim Operationsmikroskop - über die Vorrichtung gezogen werden.

Es ist vorteilhaft, wenn die Halterung für die Vorrichtung ähnlich ausgeführt ist wie die Halterung von Operationsmikroskopen, d.h. dass die steril abgedeckte Vorrichtung über dem Operationsfeld positioniert werden kann. Von Vorteil könnte es auch sein, mehrere Vorrichtungen gleichzeitig einzusetzen, um Schatten durch Erhebungen im Operationsfeld, die Hand des Operateurs oder Instrumente zu vermeiden.

Die Vorrichtung kann auch mit anderen Geräten kombiniert werden. Z. B. kann sie als Zusatzgerät zu einem Operationsmikroskop, als Bestandteil einer Operationslampe oder sogar als am Kopf des Chirurgen angebrachtes Gerät ausgebildet werden.

## Patentansprüche

1. Vorrichtung mit einer elektronischen Kamera (21) zum Aufnehmen eines Objekts (41) oder eines Teils (42) eines Objekts während der Bearbeitung desselben, insbesondere während einer chirurgischen Operation, und mit einer Einrichtung (11, 12) zum Abbilden und Projizieren des aufgenommenen Bildes, **dadurch gekennzeichnet, dass** sie optische Elemente (31, 32, 33, 34, 51, 52) zum deckungsgleichen Abbilden des aufgenommenen Bildes auf das Objekt (41) mit einem Strahlengang, der im wesentlichen mit dem Aufnahmestrahlengang zusammenfällt, und im Aufnahmestrahlengang wenigstens einen wellenlängenselektiven Filter (23, 31, 52) aufweist.

2. Vorrichtung nach Anspruch 1, **dadurch gekennzeichnet, dass** der Winkel zwischen Aufnahmestrahlengang und Abbildungsstrahlengang, die an der beobachteten Stelle des Objekts zusammenfallen, weniger als 30° beträgt.

3. Vorrichtung nach Anspruch 2, **dadurch gekennzeichnet**, lässt der Winkel weniger als 10° beträgt.

4. Vorrichtung nach Anspruch 2, **dadurch gekennzeichnet, dass** der Winkel ungefähr 0° beträgt.

5. Vorrichtung nach einem der Ansprüche 1 bis 4, **dadurch gekennzeichnet, dass** im Aufnahmestrahlengang ein schmalbandiger Filter (23, 31, 52) vorgesehen ist, der Licht mit von einer Fluoreszenzlichtwellenlänge verschiedenen Wellenlängen abschwächt.

6. Vorrichtung nach Anspruch 5, **dadurch gekennzeichnet, dass** der Filter (23, 31, 52) im Wesentlichen nur Licht einer Fluoreszenzlichtwellenlänge durchlässt.

7. Vorrichtung nach Anspruch 5, **dadurch gekennzeichnet, dass** der Filter (23, 31, 52) im Wesentlichen nur infrarotes Licht durchlässt

8. Vorrichtung nach einem der Ansprüche 1 bis 7, **dadurch gekennzeichnet, dass** sie die Einrichtungen zum Abbilden der Aufnahme der Kamera mit einer Wellenlänge oder einem Wellenlängenbereich aufweist, die bzw. der von der Wellenlänge oder dem Wellenlängenbereich der ursprünglichen Abbildung verschieden ist.

9. Vorrichtung nach Anspruch 8, **dadurch gekennzeichnet, dass** die Einrichtungen einen Filter (13, 31, 52) aufweisen.

10. Vorrichtung nach Anspruch 8, **dadurch gekennzeichnet, dass** die Einrichtung (11, 12) zum Abbilden des aufgenommenen Bildes mit einer von der Aufnahmewellenlänge verschiedenen Wellenlänge ausgebildet ist, insbesondere in einem eingeschränkten Spektralbereich des sichtbaren Spektrums wiedergibt.

11. Vorrichtung nach Anspruch 10, **dadurch gekennzeichnet, dass** die Einrichtung (11) zum Abbilden des aufgenommenen Bildes eine Array von Leuchtdioden ist.

12. Vorrichtung nach einem der Ansprüche 1 bis 11, **dadurch gekennzeichnet, dass** die Filter (31, 52) wenigstens teilweise dichroitische Spiegel sind.

13. Vorrichtung nach einem der Ansprüche 1 bis 12, **dadurch gekennzeichnet, dass** die optischen Elemente Reflexionselemente (31, 32, 33, 34, 51, 52)aufweisen, von denen mindestens eines (31, 52) teildurchlässig ist, um den Aufnahmestrahlengang und den Abbildungsstrahlengang im dem dem Objekt (41) benachbarten Bereich zur Deckung zu bringen.

14. Vorrichtung nach einem der Ansprüche 1 bis 13, **dadurch gekennzeichnet, dass** im gemeinsamen Aufnahme- und Abbildungsstrahlengang eine Linse (70) oder ein Linsensystem angeordnet ist, deren bzw. dessen Brennweite so gewählt ist, dass das abgebildete Bild in der Objektebene liegt und deckungsgleich mit dem Objekt (41) ist.

15. Vorrichtung nach Anspruch 14, **dadurch gekennzeichnet, dass** das Linsensystem eine (70) Baugruppe aus einer oder mehreren Linsen enthält, durch die beide Strahlen gemeinsam verlaufen und die als Objektiv für die Abbildung dienen.

16. Vorrichtung nach Anspruch 15, **dadurch gekennzeichnet, dass** mindestens eine Linse der Baugruppe (70) verschiebbar ist.

17. Vorrichtung nach einem der Ansprüche 1 bis 16, **dadurch gekennzeichnet, dass** zwischen der Kamera (21) und der Einrichtung (11) zum Abbilden eine Verarbeitungsschaltung (24) vorgesehen ist, die die Farbinformation des aufgenommenen Bildes verändert.

18. Vorrichtung nach Anspruch 17, **dadurch gekennzeichnet, dass** die Verarbeitungsschaltung (24) die Helligkeitsinformation des aufgenommenen Signals in Farbinformation umwandelt.

19. Vorrichtung nach einem der Ansprüche 1 bis 18, **dadurch gekennzeichnet, dass** mehrere Paare von Kameras (21) und Einrichtungen (11) zum Abbilden vorgesehen sind.
